(19) Europäisches Patentamt

European Patent Office

Office européen des brevets

(11) EP 3 968 358 A1

(12) EUROPEAN PATENT APPLICATION
published in accordance with Art. 153(4) EPC

(43) Date of publication:
16.03.2022 Bulletin 2022/11

(21) Application number: 20833183.5

(22) Date of filing: 24.06.2020

(51) International Patent Classification (IPC):
H01J 65/00 (2006.01)     F24F 7/00 (2021.01)
A61L 9/20 (2006.01)      H01J 61/16 (2006.01)

(52) Cooperative Patent Classification (CPC):
A61L 9/20; F24F 7/00; H01J 61/16; H01J 65/00

(86) International application number:
PCT/JP2020/024867

(87) International publication number:
WO 2020/262478 (30.12.2020 Gazette 2020/53)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.06.2019 JP 2019120975

(71) Applicant: Ushio Denki Kabushiki Kaisha
Tokyo 100-8150 (JP)

(72) Inventor: NAITO,Keisuke
Tokyo 100-8150 (JP)

(74) Representative: Tomerius, Isabel
Lang & Tomerius
Patentanwaltspartnerschaft mbB
Rosa-Bavarese-Strasse 5
80639 München (DE)

(54) GAS TREATMENT METHOD AND GAS TREATMENT DEVICE

(57) Provided are a gas treatment method and a gas treatment device that enable efficient treatment of a VOC-containing gas to be treated by using ultraviolet light with a main emission wavelength of 180 nm or less.

This method is a method for treating a gas to be treated containing a mixture of air and a substance that is a type of VOC and that is subjected to treatment by causing the gas to be treated to flow through a treatment space. A light source designed to emit ultraviolet light having a main emission wavelength of 160 nm to 180 nm is located in the treatment space, and the gas to be treated is passed through a gap with a separation distance of 10 mm or less from a light-emitting area of the light source at a flow velocity of 23 m/s or less.

**Fig. 9**

**Description**

TECHNICAL FIELD

The present invention relates to a gas treatment method and a gas treatment device. Particularly, the present invention relates to a gas treatment method and a gas treatment device used to treat a gas to be treated by irradiating the gas to be treated with ultraviolet light, with the gas to be treated containing a substance that is a type of volatile organic compound (VOC) and that is subjected to treatment.

BACKGROUND ART

Conventionally, some technologies utilize oxidation catalysts or photocatalysts as decomposition and removal devices for formaldehyde (see Patent Documents 1 and 2 below).

The following Patent Document 3 discloses a xenon excimer lamp designed to emit light at 172 nm, which is a shorter wavelength than the above low-pressure mercury lamp.

PRIOR ART DOCUMENT

PATENT DOCUMENTS

Patent Document 1: JP-A-2004-163055
Patent Document 2: JP-A-2000-102596
Patent Document 3: JP-A-2007-335350

SUMMARY OF THE INVENTION

PROBLEMS TO BE SOLVED BY THE INVENTION

Ultraviolet light with a main emission wavelength of 180 nm or less, as described in Patent Document 3, has conventionally been used for optical cleaning and surface modification in manufacturing processes of semiconductors and liquid crystal panels, and has been supposed to be irradiated in an atmosphere of an inert gas such as nitrogen or clean dry air.

In recent years, gases possibly affect the global environment and humans have become a problem, and certain regulations are imposed on emissions discharged from places such as automobiles and factories. Even indoors, many places where there is a possibility of using certain chemicals, such as laboratory facilities and medical sites, have VOC emission regulations.

However, knowledge has not been acquired until now about treating a VOC-containing gas to be treated by using ultraviolet light with the main emission wavelength of 180 nm or less.

It is an object of the present invention to provide a gas treatment method and a gas treatment device that enable efficient treatment of a VOC-containing gas to be treated by using ultraviolet light with the main emission wavelength of 180 nm or less.

MEANS FOR SOLVING THE PROBLEMS

A gas treatment method of the present invention is a method for treating a gas to be treated containing a mixture of air and a substance that is a type of volatile organic compound (VOC) and that is subjected to treatment by causing the gas to be treated to flow through a treatment space,

in which a light source designed to emit ultraviolet light having a main emission wavelength of 160 nm to 180 nm is located in the treatment space, and
the gas to be treated is passed through a gap with a separation distance of 10 mm or less from a light-emitting area of the light source at a flow velocity of 23 m/s or less.

As described later in the "MODE FOR CARRYING OUT THE INVENTION" section, according to the inventor's intensive research, it is confirmed that when the gas to be treated is irradiated with ultraviolet light having a main emission wavelength of 160 nm to 180 nm, the decomposition performance of the substance to be treated decreases as the flow velocity of the gas to be treated increases if it exceeds 23 m/s.

Additionally, the ultraviolet light having a main emission wavelength of 160 nm to 180 nm is easily absorbed by oxygen due to its short wavelength. This leads to a situation in which the ultraviolet light hardly reaches the gas to be treated flowing at places over 10 mm distant from the light-emitting area of the light source and the VOC is hardly decomposed.

According to the method described above, the VOC-type substance contained in the gas to be treated and subjected to treatment can be efficiently decomposed.

In this specification, the "main emission wavelength" refers to a wavelength $\lambda i$ in the wavelength range $Z(\lambda i)$ that accounts for 40% or more of a total integrated intensity of the emission spectrum when the wavelength range $Z(\lambda)$ of $\pm 10$ nm is defined for a certain wavelength $\lambda$ in the emission spectrum. For a light source, such as an excimer lamp in which a predetermined luminescent gas is enclosed, that has a considerably narrow half bandwidth and displays light intensities only at specific wavelengths, a wavelength with the highest relative intensity (the main peak wavelength) can be, in most cases, regarded as the main emission wavelength.

In the method described above, the flow velocity of the gas to be treated may be 0.3 m/s or more.

By setting the flow velocity of the gas to be treated is 0.3 m/s or more, the gas to be treated is allowed to produce a turbulent flow in the treatment space. This increases the time during which the gas to be treated is irradiated with the ultraviolet light from the light source, thereby improving the decomposition efficiency of the substance subjected to treatment.

The substance subjected to treatment may include at least one type selected from the group consisting of formaldehyde and toluene. The group for the substance subjected to treatment may include methanol, isopropyl alcohol (IPA), acetone, methyl isobutyl ketone (MIBK), and ethyl acetate, other than the above-exemplified substances.

A gas treatment device of the present invention is configured to treat a gas to be treated containing a mixture of air and a substance that is a type of volatile organic compound (VOC) and that is subjected to treatment by causing the gas to be treated to flow through a treatment space. The gas treatment device includes:

   a gas inlet to introduce the gas to be treated into the treatment space;
   a gas outlet to exhaust the gas to be treated that is treated in the treatment space; and
   a light source located in the treatment space, the light source being configured to emit ultraviolet light having a main emission wavelength of from 160 nm to 180 nm,
   in which the gas to be treated is passed through a gap with a separation distance of 10 mm or less from a light-emitting area of the light source at a flow velocity of 23 m/s or less.

The flow velocity of the gas to be treated may be 0.3 m/s or more.

By setting the flow velocity of the gas to be treated is 0.3 m/s or more, a turbulent flow of the gas to be treated is generated in the treatment space, which ensures that the gas to be treated remains in the treatment space for a longer period and allows the ultraviolet light to be irradiated for the time necessary for the decomposition of the substance subjected to treatment.

The light source may be an excimer lamp that includes a tubular body enclosed with a luminescent gas containing xenon (Xe). In this case, the light source emits ultraviolet light having a main emission wavelength of 172 nm.

The gas treatment device may include a wind shielding member arranged to surround the tubular body with the gap left or to interpose the tubular body with the gap left.

The gas treatment device may include a blower arranged between the gas inlet and the gas outlet to control the flow velocity of the gas to be treated. In this case, with the blower, the gas to be treated is controlled to be introduced into the treatment space at a flow velocity of 23 m/s or less.

EFFECT OF THE INVENTION

According to the present invention, the VOC-type substance contained in the gas to be treated and subjected to treatment can be efficiently decomposed.

BRIEF DESCRIPTION OF THE DRAWINGS

   Fig. 1 is a schematic view showing a configuration of a gas treatment device according to an embodiment of the present invention.
   Fig. 2 is a schematic cross-sectional view of an excimer lamp.
   Fig. 3 is a schematic plan view of an excimer lamp and a wind shielding member, viewed along a direction d1.

Fig. 4 is a superimposed graph of an emission spectrum of an excimer lamp enclosed with a luminescent gas containing Xe and absorption spectra of oxygen ($O_2$) and ozone ($O_3$).

Fig. 5 is a graph showing a relationship between distance from a surface of an excimer lamp and a concentration of hydroxy radical ($\cdot OH$) contained in a gas to be treated when there is no wind shielding member.

Fig. 6 is a schematic cross-sectional view of another excimer lamp.

Fig. 7 is a schematic cross-sectional view of another excimer lamp.

Fig. 8 is a schematic view showing a configuration of an experimental system.

Fig. 9 is a graph showing a relationship between the flow velocity of a gas to be treated and the VOC removal ratio.

Fig. 10 is a schematic view showing a configuration of a gas treatment device according to another embodiment of the present invention.

MODE FOR CARRYING OUT THE INVENTION

Embodiments of a gas treatment device and a gas treatment method of the present invention will be described with reference to the drawings as appropriate. Regarding the drawings shown below, size proportions in the drawings do not always coincide with actual size proportions.

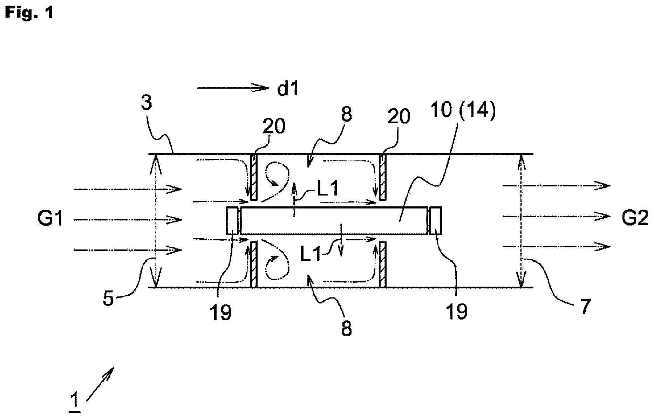

Fig. 1 is a schematic view showing a configuration of a gas treatment device according to an embodiment. A gas treatment device 1 has a housing 3 that incorporates a hollow-shaped treatment space 8. The housing 3 includes a gas inlet 5 and a gas outlet 7 located at a place apart from the gas inlet 5 in a direction d1. A gas to be treated G1 introduced from the gas inlet 5 travels in the direction d1 and is treated in the treatment space 8. After that, the gas is exhausted as a treated gas G2 from the gas outlet 7.

The gas treatment device 1 treats the gas to be treated G1, which contains a mixture of air and a substance that is a type of VOC and that is subjected to treatment, and converts the gas G1 into a treated gas G2 by decreasing a concentration of the contained substance subjected to treatment. Examples of the substance of the VOC type subjected to treatment include formaldehyde, toluene, methanol, isopropyl alcohol (IPA), acetone, methyl isobutyl ketone (MIBK), and ethyl acetate. The gas treatment device 1 can be used to treat a gas containing at least one type of these substances subjected to treatment.

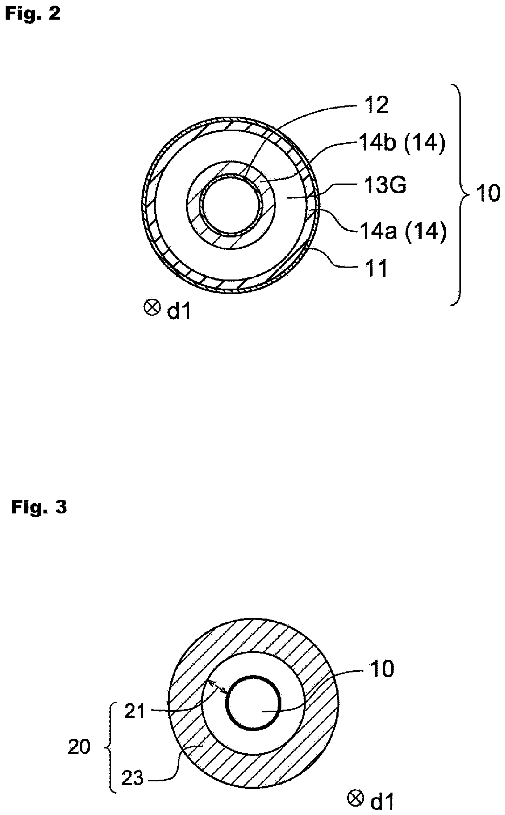

The gas treatment device 1 includes an excimer lamp 10 located in the treatment space 8. Fig. 2 is a schematic cross-sectional view of the excimer lamp 10, cross-sectioned at a plane orthogonal to the direction d1.

The excimer lamp 10 includes a tubular body 14 extending along the direction d1. More specifically, the tubular body 14 includes an outer tube 14a having a cylindrical shape and located outside, and inner tube 14b located inside the outer tube 14a coaxially with the outer tube 14a and having a cylindrical shape with a smaller inner diameter than the outer tube 14a. Both the tubes (14a, 14b) of the tubular body 14 are made of a dielectric substance such as synthetic fused silica.

The outer tube 14a and the inner tube 14b are both sealed at the end of the direction d1 (not shown), and a light-emitting space with an annular shape, when viewed from the direction d1 is formed between them. A luminescent gas 13G that forms excimer molecules by electric discharging is sealed in the light-emission space. In one specific example, the luminescent gas 13G is a gas that contains both xenon (Xe) and neon (Ne) in a predetermined ratio (e.g., 3:7) and may further include oxygen and hydrogen in minute quantities.

The excimer lamp 10 illustrated in Fig. 2 includes a first electrode 11 disposed on an outer wall surface of the outer tube 14a and a second electrode 12 disposed on an inner wall surface of the inner tube 14b. The first electrode 11 has a mesh shape or a line shape. The second electrode 12 has a film shape. The second electrode 12 may have a mesh shape or a line shape in a similar way to the first electrode 11.

In an example shown in Fig. 1, the excimer lamp 10 includes a base 19 at each end in the direction d1. The bases 19 are made of a ceramic material (an inorganic material) such as steatite, forsterite, sialon, or alumina and have a function of fixing the ends of the tubular body 14. Through a hole formed in the base 19 or an outer edge of the base 19, a power feeder (not shown) is laid to connect to the electrodes (11, 12).

When an alternating-current voltage at a high frequency, for example, approximately from 50 kHz to 5 MHz is applied to between the first electrode 11 and the second electrode 12 of the excimer lamp 10 from a lighting power source (not shown) via the power feeder, the voltage is applied to the luminescent gas 13G via the tubular body 14. This produces discharge plasma in a discharge space filled with the luminescent gas 13G and causes atoms of the luminescent gas 13G to be excited and get into an excimer state. When the atoms transition to a ground state, excimer light is generated. When the luminescent gas 13G is the gas that contains xenon (Xe) described above, the excimer light is ultraviolet light L1 with a peak wavelength near 172 nm.

The gas treatment device 1 of the present embodiment includes a wind shielding member 20. Fig. 3 is a schematic plan view of the excimer lamp 10 and the wind shielding member 20, viewed along the direction d1. The wind shielding member 20 includes a wind shielding surface 23 that has an opening around a center of the surface. The excimer lamp 10 is inserted through inside the opening of the wind shielding member 20 to create a gap 21 between a light-emitting area of the excimer lamp 10 and the wind shielding surface 23. A dimension of the gap 21 is 10 mm or less and preferably is 8mm or less. On the other hand, if the gap 21 is too thin, the treatment capacity of the gas treatment device may decrease since the gas to be treated G1 introduced from the gas inlet 5 is less likely to flow into the downstream space after colliding with the wind shielding member 20. Therefore, the dimension of the gap 21 is preferably 2 mm or more, and is more preferably 3 mm or more.

In the excimer lamp 10 shown in Fig. 2, the light-emitting area corresponds to the wall surface of the tubular body 14 that is not hidden beneath the first electrode 11 but is exposed because of the mesh shape or the line shape of the first electrode 11.

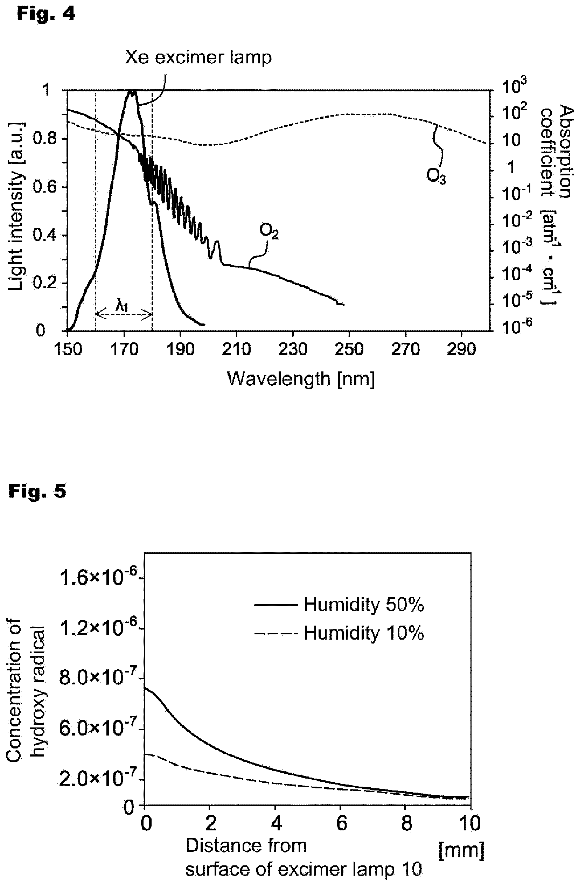

Fig. 4 is a superimposed graph of an emission spectrum of an excimer lamp enclosed with a luminescent gas containing Xe and absorption spectra of oxygen ($O_2$) and ozone ($O_3$). In Fig. 4, the horizontal axis represents wavelengths, the left vertical axis represents relative values of light intensity of the excimer lamp, and the right vertical axis represents absorption coefficients of oxygen ($O_2$) and ozone ($O_3$).

When the luminescent gas in the excimer lamp 10 is a gas containing Xe, as shown in Fig.4, the main emission wavelength of ultraviolet light L1 emitted from the excimer lamp 10 is in a range of 160 nm to 180 nm (hereinafter referred to as a "first wavelength range $\lambda_1$"). As shown in Fig. 4, the light in the first wavelength range $\lambda_1$ is absorbed by oxygen ($O_2$) to a large extent.

When the gas to be treated G1 is irradiated with the ultraviolet light L1 emitted in the first wavelength range $\lambda_1$ from the excimer lamp 10 and the ultraviolet light is absorbed by oxygen ($O_2$), a reaction in the following formula (1) proceeds. In formula (1), $O(^1D)$ represents an oxygen atom in an excited state and displays high reactivity. $O(^3P)$ is an oxygen atom in a ground state. In formula (1), $hv(\lambda_1)$ represents the absorption of light in the first wavelength range $\lambda_1$.

$$O_2 + hv(\lambda_1) \rightarrow O(^1D) + O(^3P) \cdots \qquad (1)$$

$O(^3P)$ generated by the formula (1) reacts with oxygen ($O_2$) contained in the gas to be treated G1 and generates ozone ($O_3$) in accordance with the formula (2).

$$O(^3P) + O_2 \rightarrow O_3 \cdots \qquad (2)$$

Part of $O(^1D)$ displaying high reactivity reacts with moisture ($H_2O$) contained in the gas to be treated G1 and generates a hydroxy radical ($\cdot OH$) in accordance with the formula (3).

$$O(^1D) + H_2O \rightarrow \cdot OH + \cdot OH \cdots \qquad (3)$$

$O(^1D)$ and the hydroxyl radical ($\cdot OH$) displaying high reactivity are generated by the reactions described above, and the substance of the VOC type contained in the gas to be treated G1 and subjected to treatment is thereby efficiently decomposed.

Meanwhile, as described above with reference to Fig. 4, the ultraviolet light L1 in the first wavelength range $\lambda_1$ is absorbed by oxygen ($O_2$) to a large extent. Thus, despite the introduction of the gas to be treated G1 from the gas inlet 5, the ultraviolet light L1 is absorbed by oxygen contained in the gas to be treated G1 flowing in a vicinity of the excimer lamp 10 if the wind shielding member 20 is not disposed inside the housing 3. Consequently, the gas to be treated G1 flowing through a place apart from the excimer lamp 10 cannot be irradiated with the ultraviolet light L1 while maintaining a high light intensity.

Fig. 5 is a graph showing a relationship between distance from a surface of the excimer lamp 10 and relative illumination intensity of the ultraviolet light L1 emitted from the excimer lamp 10 when the excimer lamp 10 is placed in the housing 3 without the wind shielding member 20 and is emitting the light while the gas to be treated G1 is flowing through the housing. In detail, Fig. 5 corresponds to the results calculated by simulation based on the spectral data of excimer lamp 10 and the absorption coefficient of oxygen ($O_2$) shown in Fig. 4, and the distance through which the ultraviolet light L1 is transmitted, assuming that the ultraviolet light L1 is exponentially attenuated along with an increase in the distance through which the ultraviolet light L1 is transmitted. In Fig. 5, relative illumination intensities at different places are plotted on a graph on the condition that the illumination intensity of the ultraviolet light L1 at a place of zero distance through which the ultraviolet light is transmitted, i.e., at the surface of the excimer lamp 10, is 100%.

According to the formulas (1) and (3), it is found that an amount of the hydroxy radical ($\cdot OH$) generated is proportional to an amount of $O(^1D)$, and the amount of $O(^1D)$ is proportional to the quantity of the light with which the gas is irradiated. In other words, Fig. 5 shows a relationship between distance from the surface of the excimer lamp 10, i.e., the light-emitting area, and the amount of the hydroxy radical ($\cdot OH$) generated. According to Fig. 5, it is observed that a concentration of the hydroxy radical ($\cdot OH$) decreases with an increase in the distance from the surface (the light-emitting area) of the excimer lamp 10. It is observed that the concentration of the hydroxyl radical ($\cdot OH$) is extremely low at a place approximately over 10 mm distant from the surface (the light-emitting area) of the excimer lamp 10.

According to Fig. 5, it is observed that the tendency is shown similarly regardless of humidity of the gas to be treated G1 and the concentration of the hydroxyl radical (·OH) generated rises with an increase in the humidity of the gas to be treated G1.

As described above, according to the gas treatment device 1 of the present embodiment, since the wind shielding member 20 is located inside the housing 3, a region where the gas to be treated G1 flows through is limited by the wind shielding member 20. More specifically, the gas to be treated G1 introduced from the gas inlet 5 collides with the wind shielding surface 23, a direction in which the gas is traveling changes, and the gas flows through the gap 21 with a dimension of 10 mm or less. This allows the gas to be treated G1 to be guided to a vicinity of the light-emitting area of the excimer lamp 10. Consequently, the gas to be treated G1 located at the area is irradiated with the ultraviolet light L1 with a high rate from the excimer lamp 10, and the probability of generation of $O(^1D)$ and ·OH, which display high reactivity, is increased.

The gas treatment device 1 shown in Fig. 1 includes two pieces of the wind shielding members 20 at places apart from each other in the direction d1, but there may be three or more wind shielding members 20, or even just one. Even if the gas treatment device 1 includes one piece of the wind shielding member 20, the gas to be treated G1 introduced from the gas inlet 5 passes through the gap 21 and just after that, flows toward the gas outlet 7. As a result, the gas to be treated G1 is sure to pass through the vicinity of the light-emitting area of the excimer lamp 10, albeit temporarily. Thus, the gas passing through the vicinity of the area is irradiated with the ultraviolet light L1, and this increases the probability of generation of $O(^1D)$ and ·OH, which display high reactivity.

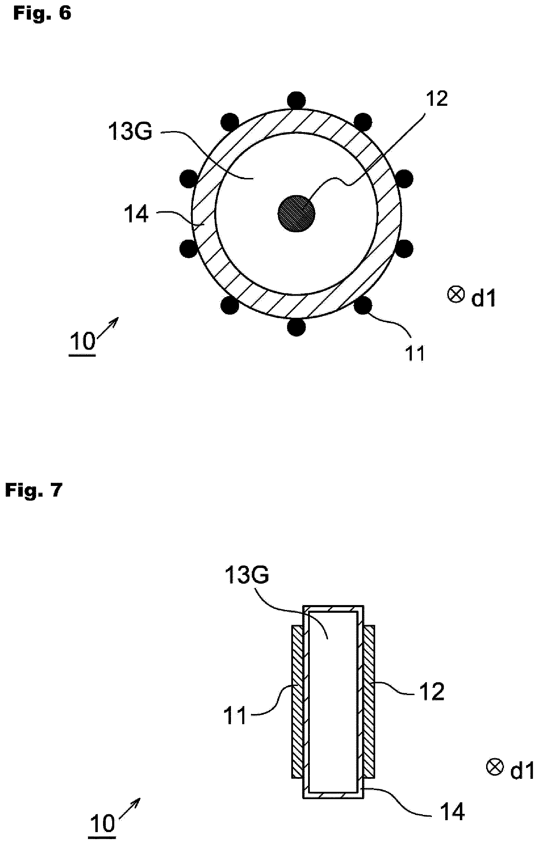

The shape of the excimer lamp 10 is not limited to that in Fig. 2, but the shape may form a structure shown in Fig. 6 or Fig. 7. Fig. 6 is a schematic cross-sectional view of an excimer lamp 10 having what is called a "single-tube structure", cross-sectioned at a plane orthogonal to the direction d1. Being different from the excimer lamp 10 shown in Fig. 2, the excimer lamp 10 shown in Fig. 6 includes a tubular body 14 of one tube. The tubular body 14 is sealed off at each end (not shown) in a lengthwise direction, i.e., in the direction d1. A luminescent gas 13G is enclosed in a space inside the tubular body. A second electrode 12 is placed inside (in an interior of) the tubular body 14, and a first electrode 11 having a net shape or a line shape is placed on an outer wall surface of the tubular body 14.

Fig. 7 is a schematic cross-sectional view of an excimer lamp 10 having what is called a "flat-tube structure", illustrated in a similar way to Fig. 6. The excimer lamp 10 shown in Fig. 7 includes a tubular body 14 of one tube being rectangular when viewed in the lengthwise direction, i.e., in the direction d1. The excimer lamp 10 includes a first electrode 11 disposed on one outer surface of the tubular body 14 and a second electrode 12 disposed on a place that is another outer surface of the tubular body 14 and that is opposite to the first electrode 11. The first electrode 11 and the second electrode 12 each have a mesh shape (a net shape) or a linear shape so as not to hinder the ultraviolet light L1 generated in the tubular body 14 from being emitted outside the tubular body 14.

The shape of the excimer lamp 10 cross-sectioned at a plane orthogonal to the direction d1 is not limited to the circles shown in Figs. 2 and 6 and to the rectangle shown in Fig. 7. The excimer lamp may have any of other various shapes in cross-section.

It is observed that by causing the gas to be treated G1 to flow through the vicinity of the light-emitting area of the excimer lamp 10 at a flow velocity of 23 m/s or less, the gas treatment device 1 decomposes the VOC contained in the gas to be treated G1 with further increased efficiency. A description will be given below with reference to examples.

[Examples]

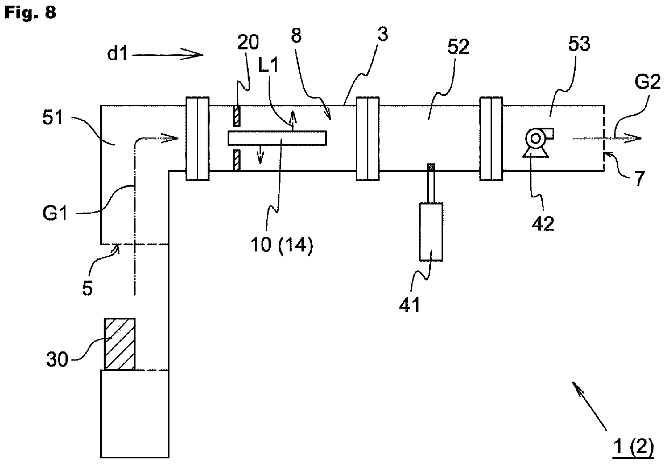

A description is given below based on experimental data. Fig. 8 is a schematic view showing a configuration of an experimental system imitating the gas treatment device 1. An experimental system 2 includes a housing 3 that has an internal treatment space 8, as well as conduits (51, 52, 53), joined to the housing 3. A VOC generator 30 volatilizes VOCs to produce the gas to be treated G1, which is obtained by mixing formaldehyde into the air. The gas to be treated G1 is taken into the conduit 51 from a gas inlet 5, flows through the conduit 51, and is introduced into the treatment space 8. The gas to be treated G1 is treated in treatment space 8 by being irradiated with ultraviolet light L1. After that, the gas as a treated gas G2 passes through the conduits 52, 53 and is exhausted from a gas outlet 7 to outside the system.

The conduit 52 is provided with a VOC measuring instrument 41 to measure the concentration of the VOC contained in the gas discharged from the treatment space 8. In conduit 53, a blower 42 is provided to control the flow velocity of the gas to be treated G1.

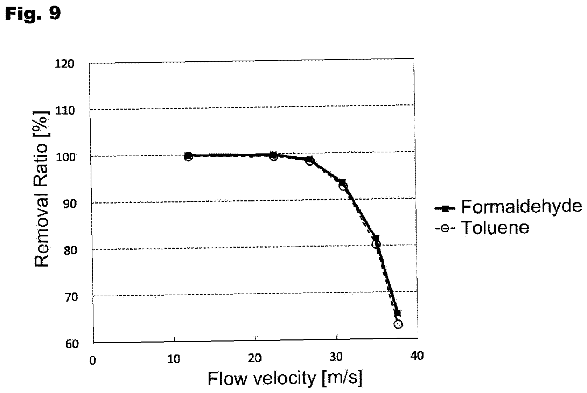

Fig. 9 is a graph showing a relationship between flow velocity of the gas to be treated G1 and VOC removal ratio in both a case where the VOC generator 30 generates formaldehyde as a VOC and a case where toluene is generated as a VOC. A VOC removal ratio Y1 is a value defined by:

$$Y1 = (A1 - A2) / A1$$

where A1 is a reference concentration that is a concentration of the VOC contained in the gas to be treated G1 before the gas is irradiated with the ultraviolet light L1, and A2 is a post-treatment concentration that is a concentration of the VOC contained in the treated gas G2.

For the reference concentration A1, a concentration of the VOC read out by the VOC measuring instrument 41 when the gas to be treated G1 flowed from the gas inlet 5 through the system with the excimer lamp 10 being unlit was used. For the post-treatment concentration A2, the value measured similarly, with the excimer lamp 10 being lit, was used.

Detailed conditions specified for the experimental system 2 were as described below.

When the VOC was formaldehyde, settings were configured such that the concentration of formaldehyde contained in the gas to be treated G1 owing to the VOC generator 30 was 15 ppm. When the VOC was toluene, settings were configured such that the concentration of toluene contained in the gas to be treated G1 owing to the VOC generator 30 was 10 ppm.

The excimer lamp 10 used for the system was an excimer lamp of the flat-tube structure shown in Fig. 7. Specifically, the dimensions of a rectangular section of the excimer lamp were 11 mm × 20 mm when viewed along the direction d1, and a length in the direction d1 was 145 mm.

A wind shielding member 20 was installed at a place 100 mm away from an end of the excimer lamp 10 adjacent to the gas inlet 5 in the direction d1. The wind shielding member 20 was a plate-shaped member made of a fluorine resin such as polytetrafluoroethylene (PTFE) and had an opening such that a gap 21 of 6 mm was maintained from electrodes (11, 12) when a tubular body 14 of the excimer lamp 10 was inserted into the opening. With reference to Fig. 7, the gap 21 formed between an end face of the tubular body 14 in a lateral direction and the wind shielding member 20 was 6 mm or less.

All of an inner diameter of a gas-flowing part of the housing 3 and inner diameters of the conduits (52, 53) were Φ100.

The flow velocity of the gas to be treated G1 was measured with the Testo 425 hot wire anemometer (made by Testo K. K.). Flow velocity values on the horizontal axis in Fig. 9 were values determined by calculating velocity values of the gas to be treated G1 passing through the gap 21 of 3 mm based on velocity values of the treated gas G2 flowing into the pipe 53 of Φ100, which were measured by the method above. More specifically, a flow rate Q of the gas to be treated G1 (and the treated gas G2) is determined by the product of a cross-sectional area S of the gas-flowing region and a flow velocity v. Since the product of the cross-sectional area S and the flow velocity v is constant while the flow rate Q is constant, a flow velocity v2 at a place to be obtained is determined based on a cross-sectional area S1 of the gas-flowing region at a place where the flow velocity v is measured, a flow velocity v1 that is measured, and a cross-sectional area S2 of the gas-flowing region at the place to be obtained.

Values plotted on the graph shown in Fig. 9 are as shown in Table 1 below.

[Table 1]

| Flow velocity [m/s] | Removal Ratio [%] | |
|---|---|---|
| | Formaldehyde | Toluene |
| 12 | 99.9 | 99.7 |
| 23 | 99.8 | 99.5 |
| 27 | 98.6 | 98.4 |
| 31 | 93.5 | 92.9 |
| 35 | 81.6 | 80.3 |
| 38 | 65.4 | 63.2 |

Unexpectedly, according to Fig. 9, it is observed that whereas the VOC removal ratio is substantially 100% for the flow velocity of the gas to be treated G1 passing through the gap 21 in a range of 23 m/s or less, the VOC removal ratio declines with a rise in the flow velocity in a range exceeding 23 m/s. Further, it is observed that the tendency of decline in the VOC removal ratio is conspicuous when the flow velocity of the gas to be treated G1 passing through the gap 21 is higher than 35 m/s. Similar results were obtained for both VOC substances, formaldehyde and toluene. Moreover, results identical to those in this example were obtained for the structure of the excimer lamp 10 in the form of the one shown in Fig. 2.

This is thought to be because even if the gas to be treated G1 passes through the gap 21 to flow through the vicinity of the light-emitting area of the excimer lamp 10 if the velocity of the gas is too fast, it will immediately spread to a location far from the light-emitting area of the excimer lamp 10 after passing through the gap 21, and the reaction described in formulas (1) to (3) above will not occur sufficiently.

On the other hand, it is thought that the VOC is efficiently decomposed if the flow velocity of the gas to be treated G1 passing through the gap 21 is within the range of 23 m/s or less because the gas to be treated G1 can flow in the vicinity of the light-emitting area of the excimer lamp 10 during a period for which the reactions in the formulas (1) to (3) described above are occurring.

According to similar calculations, it is preferred that the flow velocity of the gas to be treated G1 passing through the gap 21 be 8 m/s or less when the dimension of the gap 21 is 7 mm. It is preferred that the flow velocity of the gas to be treated G1 passing through the gap 21 be 6.7 m/s or less when the dimension of the gap 21 is 8 mm. It is preferred that the flow velocity of the gas to be treated G1 passing through the gap 21 be 5.7 m/s or less when the dimension of the gap 21 is 9 mm. It is preferred that the flow velocity of the gas to be treated G1 passing through the gap 21 be 5 m/s or less when the dimension of the gap 21 is 10 mm.

On condition that a viscosity coefficient of the gas to be treated G1 is $\mu$ [N·s/m$^2$], a diameter of the pipe is L [m], the density is $\rho$ [kg/m$^3$], and the flow velocity is v [m/s], the Reynolds number Re is defined by the following equation (4):

$$Re = (\rho \cdot v \cdot L)/\mu \cdots (4)$$

When the Reynolds number Re is 2300 or more, the flow of the fluid is assessed as a turbulent flow. If the inner diameter of the conduit (52, 53) $\Phi$ = 100 mm is adopted as the value of L, the viscosity coefficient $\mu$ is $1.82 \times 10^{-5}$ [Pa·s], and the density $\rho$ is $1.20 \times 10^{-3}$ [g/cm3], it is confirmed that the gas to be treated G1 produces a turbulent flow inside the conduits (52, 53) when the flow velocity v $\geq$ 0.32 m/s. Assuming that the gas treatment device 1, which is joined to a typical conduit with a diameter of $\Phi$100 or more, is used, the gas to be treated G1 is apt to produce a turbulent flow in the gas treatment device 1 when the flow velocity of the gas to be treated G1 is 0.3 m/s or more. As a result, a large portion of the gas to be treated G1 is apt to flow to the vicinity of the light-emitting area of the excimer lamp 10.

[Other Embodiments]

Other embodiments will now be described.

<1> In the embodiment described above, the wind shielding member 20 is a plate-shaped member that has an opening around the center thereof, and the excimer lamp 10 as a light source is inserted in the opened part to form the gap 21. However, a plurality of wind shielding members 20 without openings may be arranged to interpose the tubular body 14 of the excimer lamp 10, so that the length of the gap 21 formed between the wind shielding members 20 and the light-emitting area of the excimer lamp 10 is less than or equal to 10 mm.

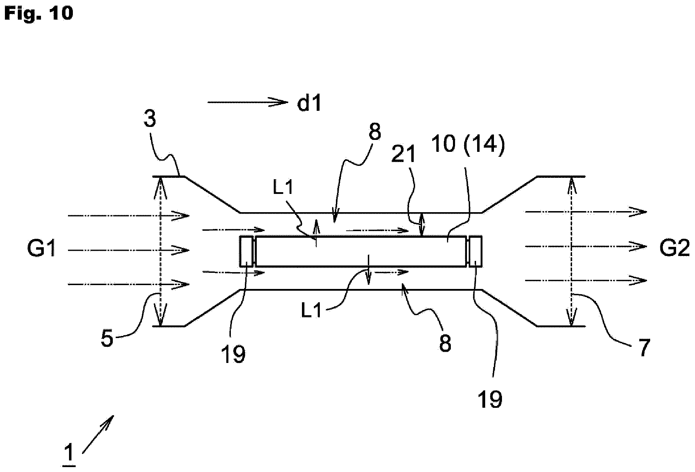

<2> With reference to Fig. 10, an opened space inside a housing 3 may be partly made thin without wind shielding member 20 such that the length of the gap 21 formed between an inner wall of the housing 3 and the light-emitting area of the excimer lamp 10 is less than or equal to 10 mm.

In this case, with L = 10 mm in the above formula (4), the gas to be treated G1 is apt to produce a turbulent flow in the gas treatment device 1 when the flow velocity of the gas to be treated G1 is 3.5 m/s or more. In a case where L = 9 mm, the gas to be treated G1 is aptto produce a turbulent flow in the gas treatment device 1 when the flow velocity of the gas to be treated G1 is 3.9 m/s or more. In a case where L = 8 mm, the gas to be treated G1 is apt to produce a turbulent flow in the gas treatment device 1 when the flow velocity of the gas to be treated G1 is 4.4 m/s or more. In a case where L = 7 mm, the gas to be treated G1 is apt to produce a turbulent flow in the gas treatment device 1 when the flow velocity of the gas to be treated G1 is 5 m/s or more. In a case where L = 6 mm, the gas to be treated G1 is apt to produce a turbulent flow in the gas treatment device 1 when the flow velocity of the gas to be treated G1 is 5.8 m/s or more.

<3> In the above embodiment, the case where the longitudinal direction of the excimer lamp 10 matches the flow direction d1 of the gas to be treated G1 is described, but the arrangement mode of the excimer lamp 10 is arbitrary. Furthermore, in the above embodiment, the case where the gas treatment device 1 has an excimer lamp 10 as the light source is described. However, the light source is not limited to the excimer lamp 10 as long as it emits ultraviolet L1 having a main emission wavelength of 160 nm to 180 nm.

<4> In the experimental system 2 referred to in Fig. 8, the flow velocity of the gas to be treated G1 is controlled by the blower 42, but the method of controlling the velocity of the gas to be treated G1 flowing through the gap 21 to 23 m/s or less is arbitrary.

<5> According to Fig. 9 and Table 1, it is observed that the VOC removal ratio further declines when the flow velocity of the gas to be treated G1 exceeds 35 m/s. When the flow velocity of the gas to be treated G1 is 35 m/s or less, a removal ratio of 80% or more is achieved for both formaldehyde and toluene.

Depending on the environmental standards, a gas containing VOC (the gas to be treated G1 shown herein) is permitted to be exhausted from a duct to outside the system in some cases, if the system is capable of removing the VOC from the gas at a ratio of 80% or more. In such a case, the flow velocity of the gas to be treated G1 may be set at 35 m/s or less. Naturally, given further increasing the VOC removal ratio beyond 80%, the flow velocity of the gas to be treated G1 is preferably set to 31 m/s or less and is particularly preferably set to 23 m/s or less.

DESCRIPTION OF REFERENCE SIGNS

| 1 | Gas treatment device |
|---|---|
| 2 | Experimental system |
| 3 | Housing |
| 5 | Gas inlet |
| 7 | Gas outlet |
| 8 | Treatment space |
| 10 | Excimer lamp |
| 11 | First electrode |
| 12 | Second electrode |
| 13G | Luminescent gas |
| 14 | Tubular body |
| 14a | Outside tube |
| 14b | Inside tube |
| 19 | Base |
| 20 | Wind shielding member |
| 21 | Gap |
| 23 | Wind shielding surface |
| 30 | VOC generator |
| 41 | VOC measuring instrument |
| 42 | Blower |
| 51, 52, 53 | Conduit |
| L1 | Ultraviolet light |

**Claims**

1. A gas treatment method for treating a gas to be treated containing a mixture of air and a substance that is a type of volatile organic compound (VOC) and that is subjected to treatment by causing the gas to be treated to flow through a treatment space,

   wherein a light source designed to emit ultraviolet light having a main emission wavelength of 160 nm to 180 nm is located in the treatment space, and
   the gas to be treated is passed through a gap with a separation distance of 10 mm or less from a light-emitting area of the light source at a flow velocity of 23 m/s or less.

2. The gas treatment method according to claim 1, wherein the flow velocity of the gas to be treated is 0.3 m/s or more.

3. The gas treatment method according to claim 1 or 2, wherein the light source is an excimer lamp that includes a tubular body enclosed with a luminescent gas containing xenon (Xe).

4. The gas treatment method according to any one of claims 1 to 3, wherein the substance subjected to treatment includes at least one type selected from the group consisting of formaldehyde and toluene.

5. A gas treatment device configured to treat a gas to be treated containing a mixture of air and a substance that is a type of volatile organic compound (VOC) and that is subjected to treatment by causing the gas to be treated to flow through a treatment space, the gas treatment device comprising:

a gas inlet to introduce the gas to be treated into the treatment space;
a gas outlet to exhaust the gas to be treated that is treated in the treatment space; and
a light source located in the treatment space, the light source being configured to emit ultraviolet light having a main emission wavelength of from 160 nm to 180 nm,
wherein the gas to be treated is passed through a gap with a separation distance of 10 mm or less from a light-emitting area of the light source at a flow velocity of 23 m/s or less.

6. The gas treatment device according to claim 5, wherein the flow velocity of the gas to be treated is 0.3 m/s or more.

7. The gas treatment device according to claim 5 or 6, wherein the light source is an excimer lamp that includes a tubular body enclosed with a luminescent gas containing xenon (Xe).

8. The gas treatment device according to claim 7, further comprising a wind shielding member arranged to surround the tubular body with the gap left or to interpose the tubular body with the gap left.

9. The gas treatment device according to any one of claims 5 to 8, further comprising a blower arranged between the gas inlet and the gas outlet to control the flow velocity of the gas to be treated.

10. The gas treatment device according to any one of claims 5 to 9, wherein the substance subjected to treatment includes at least one type selected from the group consisting of formaldehyde and toluene.

11. A gas treatment method for treating a gas to be treated containing a mixture of air and a substance that is a type of volatile organic compound (VOC) and that is subjected to treatment by causing the gas to be treated to flow through a treatment space,

wherein a light source designed to emit ultraviolet light having a main emission wavelength of 160 nm to 180 nm is located in the treatment space, and
the gas to be treated is passed through a gap with a separation distance of 10 mm or less from a light-emitting area of the light source at a flow velocity of 35 m/s or less.

12. A gas treatment device configured to treat a gas to be treated containing a mixture of air and a substance that is a type of volatile organic compound (VOC) and that is subjected to treatment by causing the gas to be treated to flow through a treatment space, the gas treatment device comprising:

a gas inlet to introduce the gas to be treated into the treatment space;
a gas outlet to exhaust the gas to be treated that is treated in the treatment space; and
a light source located in the treatment space, the light source being configured to emit ultraviolet light having a main emission wavelength of from 160 nm to 180 nm,
wherein the gas to be treated is passed through a gap with a separation distance of 10 mm or less from a light-emitting area of the light source at a flow velocity of 35 m/s or less.

Fig. 1

**Fig. 2**

12

14b (14)

13G

14a (14)

11

} 10

⊗ d1

**Fig. 3**

10

21

20 {

23

⊗ d1

**Fig. 4**

**Fig. 5**

**Fig. 6**

13G

12

14

$\otimes$ d1

10

11

**Fig. 7**

13G

11

12

$\otimes$ d1

14

10

**Fig. 8**

EP 3 968 358 A1

**Fig. 9**

Fig. 10

EP 3 968 358 A1

## INTERNATIONAL SEARCH REPORT

| International application No. |
| --- |
| PCT/JP2020/024867 |

A.   CLASSIFICATION OF SUBJECT MATTER
H01J 65/00(2006.01)i; F24F 7/00(2006.01)i; A61L 9/20(2006.01)i; H01J
61/16(2006.01)i
FI: A61L9/20; H01J65/00 A; H01J61/16 N; F24F7/00 A
According to International Patent Classification (IPC) or to both national classification and IPC

B.   FIELDS SEARCHED

Minimum documentation searched (classification system followed by classification symbols)
A61L9/00-9/22; B01D53/34-53/85; F24F7/00; H01J61/16; H01J65/00

Documentation searched other than minimum documentation to the extent that such documents are included in the fields searched
Published examined utility model applications of Japan         1922-1996
Published unexamined utility model applications of Japan       1971-2020
Registered utility model specifications of Japan               1996-2020
Published registered utility model applications of Japan       1994-2020

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| Y | Microfilm of the specification and drawings annexed to the request of Japanese Utility Model Application No. 75649/1989 (Laid-open No. 61982/1991) (NAKANO, Koji) 18.06.1991 (1991-06-18) claims, column 5, line 5 to column 9, line 20, fig. 1-2 | 1-12 |
| Y | JP 2014-500890 A (KONINKLIJKE PHILIPS N.V.) 16.01.2014 (2014-01-16) paragraph [0005] | 1-12 |
| Y | WO 2019/101276 A1 (DOMISPHERE APS) 31.05.2019 (2019-05-31) claims, column 7, line 33 to column 9, line 6 | 1-12 |
| Y | JP 9-509340 A (KLEAN A/S) 22.09.1997 (1997-09-22) claims, column 10, lines 20-23 | 1-12 |
| Y | JP 2003-290622 A (KOKEN LTD.) 14.10.2003 (2003-10-14) paragraphs [0010], [0022]-[0023] | 1-12 |

☐   Further documents are listed in the continuation of Box C.          ☒   See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 06 August 2020 (06.08.20200 | 25 August 2020 (25.08.2020) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**
Information on patent family members

International application No.

PCT/JP2020/024867

| Patent Documents referred in the Report | Publication Date | Patent Family | Publication Date |
|---|---|---|---|
| JP 3-61982 U1 | 18 Jun. 1991 | (Family: none) | |
| JP 2014-500890 A | 16 Jan. 2014 | US 2013/0207002 A1 paragraph [0005] WO 2012/052905 A1 EP 2630216 A1 CN 103210057 A | |
| WO 2019/101276 A1 | 31 May 2019 | (Family: none) | |
| JP 9-509340 A | 22 Sep. 1997 | US 5891399 A claims, column 4, lines 21-25 WO 1995/017634 A1 EP 736159 A1 CN 1141074 A | |
| JP 2003-290622 A | 14 Oct. 2003 | US 2003/0185728 A1 paragraphs [0024]-[0025], [0168]-[0170] EP 1350561 A2 CN 1448198 A KR 10-0509400 B1 | |

Form PCT/ISA/210 (patent family annex) (January 2015)

**EP 3 968 358 A1**

**REFERENCES CITED IN THE DESCRIPTION**

**Patent documents cited in the description**

- JP 2004163055 A
- JP 2000102596 A
- JP 2007335350 A